# EUROPEAN PATENT SPECIFICATION

(11) **EP 3 974 731 B1**
(45) Date of publication and mention of the grant of the patent: **13.11.2024**
(21) Application number: 21196764.1
(22) Date of filing: 15.09.2021
(51) Int. Cl.: F24C 15/02

(54) **COOKING APPLIANCE**
KOCHGERÄT
APPAREIL DE CUISSON

(30) Priority: 25.09.2020 KR 20200125073
(43) Date of publication of application: 30.03.2022
(73) Proprietor: LG Electronics Inc., SEOUL 07336 (KR)
(72) Inventor: YU, Cheong Hwan, 08592 Seoul (KR)
(74) Representative: Vossius & Partner Patentanwälte Rechtsanwälte mbB

(56) References cited:
- DE-U1- 202016 103 077
- DE-U1- 29 922 260
- US-B2- 10 688 327

## Description

Disclosed herein is a cooking appliance, and in particular, a cooking appliance having a structure that ensures improvement in durability.

Details in the background section do not constitute the related art but are given only as background information concerning the subject matter of the present disclosure.

Cooking appliances, one of the home appliances, are installed in the kitchen and cook food as a user wants. The cooking appliances can fall into different categories, based on a heat source or a type, and the sort of a fuel.

The cooking appliances can be categorized into an open cooking appliance in which food is placed in an open space, and a sealed cooking appliance in which food is placed in a closed space, based on a way of cooking food. The sealed cooking appliance includes an oven, a microwave oven and the like, and the open cooking appliance includes a cooktop, a hob, and the like.

In the sealed cooking appliance, a space, in which a food item is placed, is shielded, and the shielded space is heated to cook the food item. The sealed cooking appliance is provided with a cooking space in which a food item is placed and which is shielded when the food item is cooked. In the cooking space, a food item is actually cooked. A heat source is disposed inside or outside the cooking space to heat the cooking space.

The sealed cooking appliance is provided with a door that selectively opens and closes the cooking space in a rotatable manner. The door is installed in a main body in a rotatable manner through a door hinge and rotates around a portion in which the door is coupled to the main body to selectively open and close the cooking space.

A heat source is disposed in an inner space of the cooking space opened and closed by the door, to heat the cooking space. The heat source includes a gas burner or an electric heater and the like.

When a food item is put into the cooking space of the cooking appliance and cooked in a high temperature atmosphere, a large amount of foreign substances such as fat and the like can be produced from the food item. In particular, when meat such as a chicken is cooked at a high temperature, a large amount of fat can be produced from the meat.

To reduce or prevent an escape of the foreign substances out of the cooking space, a packing member, i.e. a sealing member, can be provided for the cooking space.

However, when a high-temperature foreign substance contacts the packing member, the packing member can be corroded or damaged by the high-temperature foreign substance. The corrosion and damage of the packing member, caused by the high-temperature, can result in reduction in sealing performance of the packing member. Accordingly, the high-temperature foreign substance can escape from the cooking space, causing injuries to a user.

Under the circumstances, there is a growing need for a cooking appliance having an improved structure that helps to suppress direct contact between the packing member and the high- temperature foreign substance to ensure good sealing performance of the packing member provided for the cooking space.
DE 299 22 260 U1 discloses a sealing system for sealing a baking cell, in particular for the door of a pyrolytic cleaning oven. US 10 688 327 B2 discloses an oven appliance having a flame arrester. DE 20 2016 103 077 U1 discloses a seal for a cooking appliance that is characterized by a long service life and at the same time low production costs.

The object of the present disclosure is to provide a means to reduce or prevent high-temperature foreign substance-driven melting, deformation or damage of a packing member disposed in a cooking appliance. This object is achieved by the features of claim 1.

According to the disclosure, the cooking appliance is provided with a bracket to reduce or prevent deposition of high-temperature foreign substances, flowing down to a lower portion of an inner glass, on a lower frame of the packing member.

The object of the present disclosure is to provide a cooking appliance in which the bracket has a plurality of bent portions and closely contacts a door such that the cooking appliance has a structure that suppresses contact between high-temperature foreign substances, flowing down to the inner glass of the door, and the lower frame of the packing member.

Aspects according to the present disclosure are not limited to the above ones, and other aspects and advantages that are not mentioned above can be clearly understood from the following description and can be more clearly understood from the embodiments set forth herein. Additionally, the aspects and advantages in the present disclosure can be realized via means and combinations thereof that are described in the appended claims.

The problems identified above are solved by the invention defined in the appended independent claim. Preferred aspects of the invention are defined in the appended dependent claims. In the following description, there is provided a cooking appliance which may include a main body provided with a cooking space, a door configured to open and close the cooking space, a packing member disposed at an entrance of the cooking space and configured to seal a gap between the main body and the door when the door is closed, and a bracket which is disposed on or above an upper side of a lower frame disposed in a lower end portion of the packing member and is configured to block a foreign substance from contacting the lower frame when the door is closed.

Since the bracket has a plurality of bent portions, the bracket may change a flow direction of a liquid-or-gel-phase foreign substance flowing down from an inner surface of the door and having high fluidity to suppress contact between the lower frame of the packing member and the foreign substance that continues to flow down to a lower end portion of the door through a gap at a portion where the bracket contacts the door because of gravity.

At least a portion of the plurality of bent portions of the bracket may closely contact the inner surface of the door. Accordingly, the gap of the contact portion between the bracket and the door may be removed or significantly narrowed, to suppress the foreign substance from passing through the gap of the contact portion between the bracket and the door.

According to the following description, there is further provided a cooking appliance which may include a main body provided therein with a cooking space, a door configured to open and close the cooking space, a packing member disposed at an entrance of the cooking space and configured to seal a gap that is created in a portion where the main body contacts the door with the door closed, and a bracket coupled to a lower portion of the door and to reduce or prevent contact between the packing member and a foreign substance moving to the lower portion of the door when the door is closed.

The bracket may include a base part coupled to the lower portion of the door, and an additional edge part connected to the base part, formed to protrude in a front-rear direction of the main body, and configured to cover an upper surface of the packing member. When the door is closed, one end of the additional edge part may be arranged to contact an inner surface of the door and the other end of the additional edge part is positioned further inward than the packing member to guide a high-temperature foreign substance, flowing down along the inner surface of the door, inside the cooking space not to contact the upper surface of the packing member.

The bracket may further include a first bent part connected to the base part and bent with respect to the base part, a second bent part bent and extended from the first bent part, and a third bent part bent and extended from the second bent part and having one end connected to the additional edge part.

The additional edge part may be disposed further upward than a lower end portion of the packing member when the door is closed.

The bracket may be integrally formed in the manner of bending one plate. The additional edge part may be provided with a folded portion, in which a plate is folded in two in a certain portion such that one plate contacts another plate, in an end portion thereof. In other words, the addition edge part may have two layers of the plate at the folded portion.

A portion of the folded portion may be disposed at the end of the additional edge part, and the end of the additional edge part may be rounded.

An angle formed by the second bent part and the third bent part of the bracket may be an acute angle. In a state in which the bracket is coupled to the door, at least a portion of one surface of the third bent part may closely contact an inner glass mounted onto the door.

The base part may include a first cell bent from the first bent part, and a pair of second cells bent at both sides of the first bent part. The base part may be longer than the first cell in a left-right direction of the door. The second cell may be provided with a first coupling hole for a coupling with the door, and the door may be provided with a second coupling hole for a coupling of the base part in a portion corresponding to the first coupling hole.

The first bent part may be provided with a third coupling hole for a coupling with the door. The third coupling hole may be formed in a direction across a direction in which the first coupling hole is formed. In other words, the direction of the third coupling hole may be not in parallel with the direction of the first coupling hole. The door may be provided with a fourth coupling hole for a coupling of the first bent part in a portion corresponding to the third coupling hole.

The door may include a locker disposed on both sides of the bracket, spaced from the bracket and configured to keep the door closed. The door may include a first frame onto which the locker is mounted, which has a space in a central portion thereof, and at which the bracket is disposed. The door may further include a second frame disposed in an edge portion of the first frame, and a third frame having a space in a central portion thereof, surrounding the first frame and the second frame and forming an exterior of the door. The door may further include a handle mounted onto the third frame. An outer glass may be disposed in the central portion of the third frame and disposed outside the door. An inner glass may be disposed in the central portion of the first frame and disposed inside the door.

The additional edge part may be disposed higher than a lower end of the inner glass with the door closed.

One surface of the base part may be disposed to face a lower end surface of the door. At least a portion of one surface of the first bent part may closely contact an inner surface of the door.

One surface of the second bent part may be disposed to face a lower end surface of the inner glass. At least a portion of one surface of the third bent part may closely contact one surface of the inner glass.

According to the following description, there is further provided a cooing appliance which may include a main body provided therein with a cooking space, a door configured to open and close the cooking space and including a first frame having a space in a central portion thereof, a second frame disposed in an edge portion of the first frame, a third frame having a space in a central portion thereof, surrounding the first frame and the second frame and forming an exterior of the door. An outer glass may be disposed in the central portion of the third frame and an inner glass may be disposed in the central portion of the first frame. A packing member may be disposed at an entrance of the cooking space and configured to seal a gap that is created in a portion where the main body contacts the door when the door is closed. A bracket may be coupled to a lower portion of the door and to reduce or prevent contact between the packing member and a foreign substance moving to the lower portion of the door when the door is closed.

The bracket may include a base part coupled to the lower portion of the door, and an additional edge part connected to the base part, formed to protrude in a front-rear direction of the main body and configured to cover an upper surface of the packing member. The bracket may further include a first bent part connected to the base part and bent with respect to the base part, a second bent part bent and extended from the first bent part and a third bent part bent and extended from the second bent part and having one end connected to the additional edge part.

The bracket may be integrally formed in a way that a plate is bent The additional edge part may be provided with a folded portion, in which a plate is folded in two in a certain portion such that one plate contacts another plate, in an end portion thereof, and the end of the additional edge part may be rounded. In other words, the additional edge part may have the folded portion in which the plate is folded in two layers.

The additional edge part may be further upward than a lower end portion of the packing member with the door closed. An angle formed by the second bent part and the third bent part of the bracket may be an acute angle. In a state in which the bracket is coupled to the door, at least a portion of one surface of the third bent part may closely contact an inner glass mounted onto the door.

One surface of the base part may be disposed to face a lower end surface of the door, at least a portion of one surface of the first bent part may closely contact an inner surface of the door. One surface of the second bent part may be disposed to face a lower end surface of the inner glass, and at least a portion of one surface of the third bent part may closely contact one surface of the inner glass.

Since the cooking appliance according to the following description may be provided with a bracket that is disposed in a portion, corresponding to a packing member in an up-down direction, in a lower portion of an inside of a door with the door closed and disposed further upward than a lower end portion of the packing member, the bracket effectively suppresses deposition of a high-temperature foreign substance, flowing down from an inner surface, i.e., an inner glass of the door, on a lower end portion of the packing member.

Accordingly, the packing member's melting, deformation or damage, caused by direct contact between the high-temperature foreign substance and the packing member may be effectively reduced or prevented.

The cooking appliance according to the disclosure may be provided with a folded portion at an additional edge part of the packing member, and the folded portion may be twice or greater thicker than any other parts of the bracket, to effectively reduce or prevent the additional edge part's deformation or damage caused by an external impact.

The cooking appliance according to the disclosure may be provided with the additional edge part of the packing member, the end of which is not thin and sharp but thick and rounded as described above, to effectively prevent injuries of a body part of the user even when the body part contacts the end of the additional edge part.

The cooking appliance according to the disclosure may be provided with the bracket having a plurality of bent portions. When the bracket is firmly coupled to the door, the bent portions may closely contact a surface of the door or be disposed in an approximately horizontal direction with respect to the cooking appliance, to effectively reduce or prevent a flow of a high-temperature foreign substance, flowing down along a surface of the inner glass, to the packing member along a gap of a portion in which the bracket contacts the door.

Specific effects are described along with the above-described effects in the section of Detailed Description.

### BRIEF DESCRIPTION OF DRAWING

The accompanying drawings constitute a part of the specification, illustrate one or more embodiments in the disclosure, and together with the specification, explain the disclosure, wherein:
FIG. 1 is a perspective view showing a cooking appliance in one embodiment;
FIG. 2 is a cross-sectional view showing the cooking appliance in one embodiment;
FIG. 3 is an enlarged view showing portion A in FIG. 2;
FIG. 4 is a perspective view showing a bracket in one embodiment;
FIG. 5 is a side view showing the bracket in one embodiment;
FIG. 6 is a cross-sectional view showing the cooking appliance with a door open in one embodiment;
FIG. 7 is an enlarged view showing portion B in FIG. 6;
FIG. 8 is an enlarged view showing a portion of a cross section of the cooking appliance in one embodiment;
FIG. 9 is an exploded perspective view for describing a door and a bracket of the cooking appliance in one embodiment; and
FIG. 10 is an enlarged view showing a portion of FIG. 9.

The above-described aspects, features and advantages are specifically described hereunder with reference to the accompanying drawings such that one having ordinary skill in the art to which the present disclosure pertains can easily implement the technical spirit of the disclosure. In the *disclosure, detailed descriptions* of known technologies in relation to the disclosure *are* omitted if they are deemed to *make* the *gist* of the *disclosure* unnecessarily *vague.* Below, preferred embodiments according to the disclosure are specifically described with reference to the accompanying drawings. In the drawings, identical reference numerals can denote identical or similar components.

The terms "first", "second" and the like are used herein only to distinguish one component from another component. Thus, the components should not be limited by the terms. Certainly, a first component can be a second component unless stated to the contrary.

Throughout the disclosure, each component can be provided as a single one or a plurality of ones, unless explicitly stated to the contrary.

The singular forms "a", "an" and "the" are intended to include the plural forms as well, unless explicitly indicated otherwise. It should be further understood that the terms "comprise" or "include" and the like, set forth herein, are not interpreted as necessarily including all the stated components or steps but can be interpreted as excluding some of the stated components or steps or can be interpreted as including additional components or steps.

Throughout the disclosure, the terms "A and/or B" as used herein can denote A, B or A and B, and the terms "C to D" can denote C or greater and D or less, unless stated to the contrary. The term "front" of a cooking appliance means a side of the cooking appliance having a door, and the term "rear" of the cooking appliance means a side opposite to the front of the cooking appliance. The term "vertical direction" means a up-down direction of the cooking appliance, and the term "horizontal direction" means a left-right direction of the cooking appliance. The term "inward" indicates a direction from the outside of the cooking appliance toward a center of the cooking space.

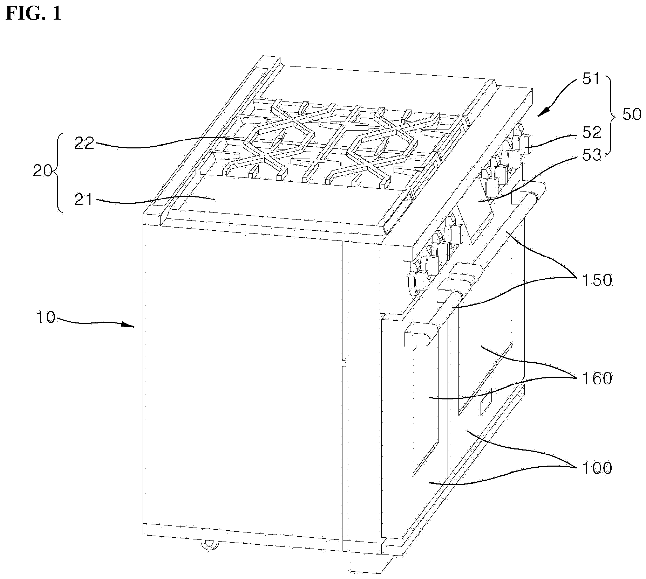

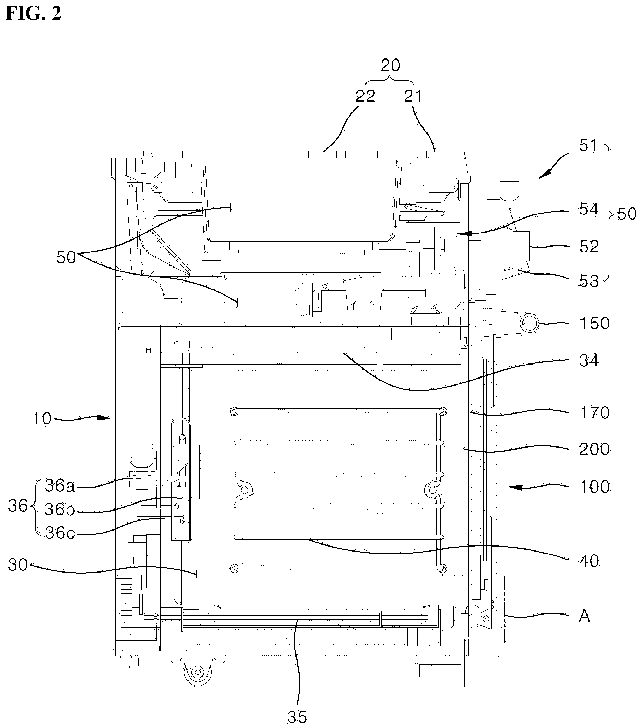

FIG. 1 is a perspective view showing a cooking appliance in one embodiment. FIG. 2 is a cross-sectional view showing the cooking appliance in one embodiment.

The cooking appliance in the embodiment may be provided with two cooking spaces 30. Accordingly, the cooking appliance may be provided with two doors 100 configured to open and close each of the cooking spaces 30 respectively. In this case, the cooking appliance may be provided with two brackets 300 in the embodiment.

The two cooking spaces 30 and the two doors 100 may have the same or a similar structure except that the two cooking spaces 30 and the two doors 100 have different widths. Accordingly, the two brackets 300 in the embodiment may have the same or a similar structure except that the two brackets 300 have different length respectively to correspond to the widths of the cooking spaces 30.

Hereunder, described are a structure of a cooking space 30 having a relatively small width, a structure of a door 100 having a relatively small width and corresponding to the cooking space 30, and a bracket 300 having a relatively small length and mounted onto the door 100.

Referring to FIGS. 1 and 2, a main body 10 may form an exterior of the cooking appliance in one embodiment. The main body 10 may be provided therein with the cooking space 30 and have a shape including an approximately rectangular cuboid shape, and may be made of a material having a predetermined strength to protect a plurality of components installed in an inner space thereof.

The main body 10 may be provided with a cooktop part 20 configured to heat food or a vessel containing food and cook the food, in an upper end portion thereof. The cook top part 20 may be provided with an upper plate 21 that forms an exterior of an upper surface of the cooking appliance and closes the upper end of the main body 10.

The cooktop part 20 may be provided with one or more heating parts 22 for heating food to be cooked or a vessel containing food to be cooked, in a central portion thereof. The heating part 22 may be a heating device that uses gas as a fuel in one example. In another example, the heating part 22 may be an induction heater that uses electricity. The heating part 22 may have different structures depending on the sort of heat sources.

Additionally, the cooktop part 20 may be provided with the cooking space 30 serving as a space in which food is cooked, on a lower side thereof.

The cooking space 30 may be formed into a rectangular cuboid, a front surface of which is open. In a state in which the cooking space 30 is shielded, an inner space of the cooking space 30 may be heated to cook food.

The cooking space 30 may be provided with an upper heater 34 configured to heat the inner space of the cooking space 30 from above, on an upper side thereof, and may be further provided with a lower heater 35 configured to heat the inner space of the cooking space 30 from below, on a lower side thereof.

Additionally, the cooking space 30 may be further provided with a convection part 36 configured to heat the inner space of the cooking space 30 as a result of convection of hot air, on a rear side thereof. The convection part 36 may include a convection motor 36a, a convection fan 36b configured to rotate as a result of operation of the convection motor 36a and to allow of a flow of air in the inner space of the cooking space 30, and a convection heater 36c provided in a way that surrounds the convection fan 36b and configured to heat flowing air.

The convection part 36 may forcibly allow of a flow of air in the inner space of the cooking space 30. That is, the convection part 36 may heat and allow of the flow of the air in the inner space of the cooking space 30 to heat the inner space of the cooking space 30, thereby uniformly heating food in the inner space of the cooking space 30.

The cooking space 30 may be provided with a rack 40, on both lateral walls thereof. A vessel containing food may be held on the rack 40. To adjust a height of the vessel containing food, the rack 40 may have multiple steps as illustrated in FIG. 2.

The door 100 configured to open and close the cooking space 30 may be rotatably disposed on a front surface of the cooking appliance. The door 100 may be a pull-down type door in which an upper end of the door rotates around a lower end of the door in an up-down direction to open and close the cooking space 30.

The door 100 may be entirely formed into a cuboid having a predetermined thickness. The door 100 may be provided with a handle 150, which is gripped by a user when the user rotates the door 100, on a front surface thereof. The user may open and close the door 100 readily using the handle 150.

A control panel 51 may be disposed on a front surface of the cooktop part 20 and/or an upper side of the door 100. The control panel 51 may be provided with an input part 52 to which the user inputs a manipulation signal for operating devices disposed in the cooktop part 20 and the cooking space 30, on a front surface thereof.

The input part 52 may be provided with a plurality of manipulation switches such that the user may input a manipulation signal directly. A manipulation switch of the input part 52 may be formed with a knob and the like, as illustrated in FIG. 1.

For example, when a heating device using gas as a fuel is used as the heating part 22, the input part 52 formed with a knob may be connected to a valve adjusting part 54, and the user may adjust the valve adjusting part 54 as a result of manipulation such as a rotation of the knob and the like to adjust an opening degree of a gas valve.

Thus, the user may ignite or extinguish fire on the heating part 22 as result of the manipulation of the input part 52, or may adjust a flow amount of gas introduced from the outside to adjust thermal power of the heating part 22.

Further, the control panel 51 may be further provided with a display 53 configured to provide information on operation of the cooking appliance or information on cooking of a food item and the like, and the user may see various pieces of information on the cooking appliance through the display 53.

An electronic component space 50 serving as a space in which electronic components are disposed may be formed between the cookotp part 20 and the cooking space 30 .

Upper portions of the control panel 51 and the door 100 may be disposed on a front side of the electronic component space 50, and the cooking appliance may have a structure in which the front surface of the electronic component space 50 is shielded by the control panel 51 and the door 100.

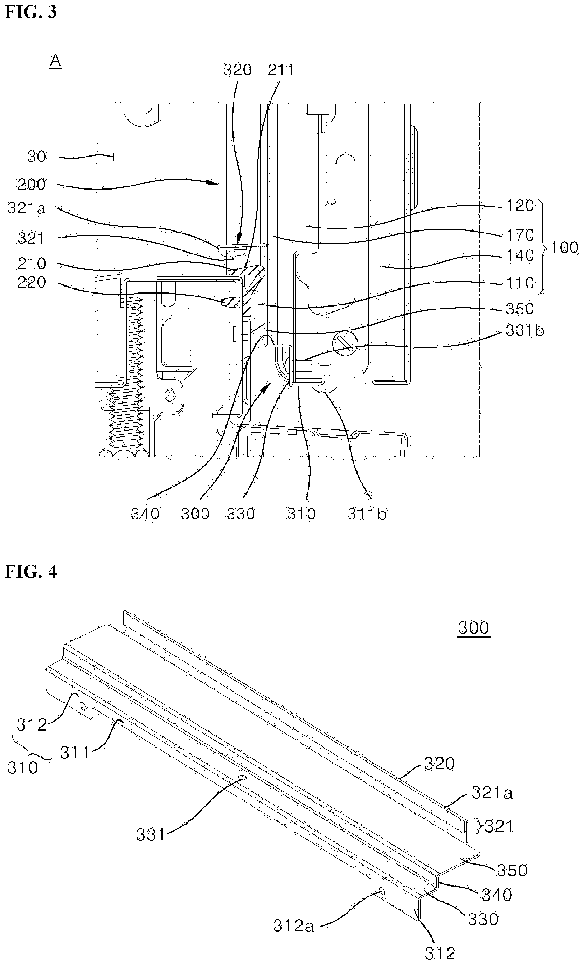

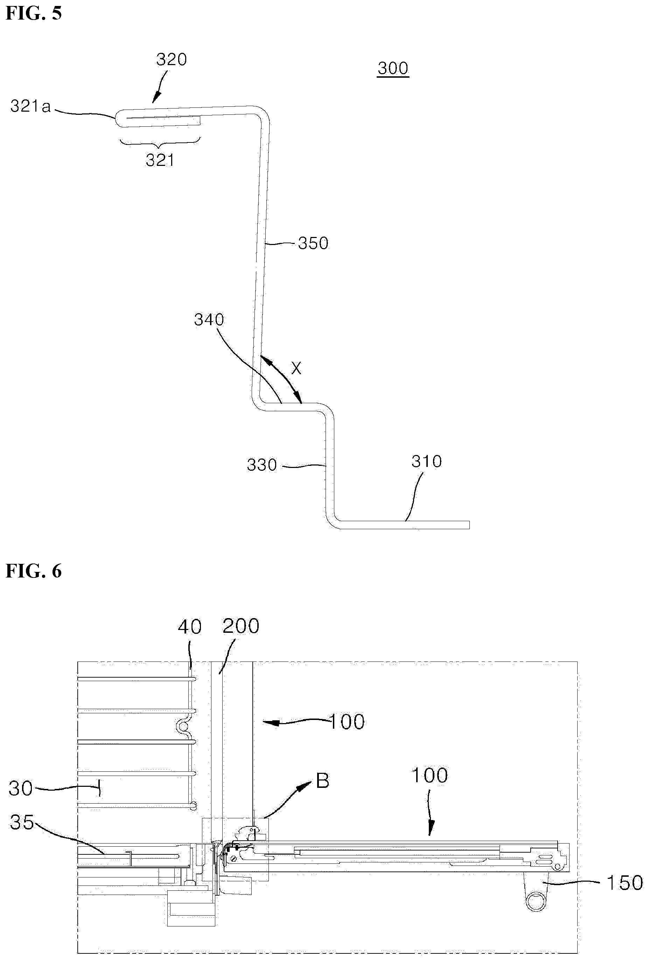

FIG. 3 is an enlarged view showing portion A in FIG. 2. FIG. 4 is a perspective view showing a bracket 300 in one embodiment. FIG. 5 is a side view showing the bracket 300 in one embodiment.

The cooking appliance may include a packing member 200 and the bracket 300.

The packing member 200 may be disposed at an entrance of the cooking space 30, and may seal a gap that is created in a portion where the main body 10 contacts the door 100 when the door 100 is closed.

The packing member 200 may be mounted onto a wall of the cooking space 30 at the entrance of the cooking space 30. When the cooking space 30 is seen from the front, the packing member 200 may be mounted onto the entrance of the cooking space 30 and may be entirely formed with a shape of a ring.

The packing member 200 may configured to be easily attached to and detached from the entrance of the cooking space 30. To this end, a lower frame 210 forming a lower end portion of the packing member 200 may have a coupling projection 220 for coupling to a groove formed at the main body 10, as illustrated in FIG. 3. Likewise, a structure, which is the same as or similar to the coupling projection 220, may be formed in an upper end portion of the packing member 200.

Accordingly, when the door 100 is closed, a gap formed between the entrance of the cooking space 30 and the door 100 may be sealed such that foreign substances and hot air produced in the cooking space 30 are prevented from leaking outward through the gap or such that foreign substances are prevented from coming into the cooking space 30 through the gap from the outside.

Since the packing member 200 shields the gap between the entrance of the cooking space 30 and the door 100, during a cooking process, high-temperature substances may be blocked from leaking out of the cooking appliance to protect the user, and foreign substances may be blocked from coming into the cooking space 30 through the gap from the outside to keep the inside of the cooking space 30 hygienic.

The packing member 200 may be made of a material that is elastic and has excellent thermal resistance to seal the gap. Materials having the above properties may include a silicone rubber, for example. Thus, the packing member 200 may be made of silicone rubber.

Silicone rubber does not melt even at a high temperature, and its physical properties do not change even at a high temperature. Accordingly, silicone rubber may be used for a sealing means for a device that operates in a high-temperature atmosphere.

However, while food is cooked in the cooking space 30 at a high temperature, the packing member 200 may be damaged when high-temperature foreign substances produced from the food affects the packing member 200 made of silicone rubber.

For example, when meat such as chicken and the like is heated and cooked in the cooking space 30, fat may melt in the cooking space 30, and the high-temperature melted fat may be splattered or scattered and attached to an inner glass 170 of the door 100.

A liquid or a gel-phase foreign substance that has a high temperature and high fluidity, e.g., fat of meat, on the inner glass 170 of the door 100, may flow down to a lower portion of the inner glass 170.

The high-temperature foreign substance may flow down to the lower portion of the inner glass 170, and may pile on the lower frame 210 of the packing member 200, disposed in the lower portion of the inner glass 170.

The high-temperature foreign substance gathered on the packing member 200 may chemically react with the packing member 200 in a high-temperature atmosphere. Thus, the packing member 200 may be melted, deformed or damaged. The packing member 200 made of silicone rubber, which exhibits a good heat resistance at a high temperature, may also be melted, deformed or damaged in a high-temperature atmosphere.

In the embodiment, the cooking appliance may be provided with the bracket 300 to prevent a foreign substance, having a high temperature and flowing down to the lower portion of the inner glass 170, from piling on the lower frame 210 of the packing member 200. Hereunder, the bracket 300 is specifically described.

The bracket 300 may protrude from the door 100 to the inside of the cooking space 30. The bracket 300 may form a portion of a frame constituting the door 30 and onto which various components are mounted.

The bracket 300 may be coupled to a lower portion of the door 100, and when the door 100 is closed, may prevent contact between a foreign substance flowing to the lower portion of the door 100 and the packing member 200.

The bracket 300 may have a plurality of bent portions. The bracket 300 may be made of a material that has good elasticity and corrosion resistance and exerts relatively high restoring force at a high temperature.

The bracket 300 may be made of aluminum, aluminum alloys, copper, copper alloys and the like, for example. Additionally, the bracket 300 may have a coating layer, which ensures resistance against corrosion even at a high temperature, on a surface thereof.

The coating layer may be made of a material that is not deformed chemically or physically even when the coating layer is exposed at a high temperature or contacts a foreign substance in the cooking space 30.

The bracket 300 may be integrally formed in a way that a plate is bent. In one example, a metallic plate may be cut to have an exterior of the bracket 300, and bents parts may be formed on the cut plate using a bending device, to manufacture the bracket 300. In another example, the bracket 300 may be manufactured using injection molding, casting, welding and the like.

The bracket 300 may include a base part 310 and an additional edge part 320. The bracket 300 may further include a first bent part 330, a second bent part 340 and a third bent part 350.

The base part 310 may be coupled to the lower portion of the door 100. The base part 310 may include a first cell 311 and a second cell 312.

The first cell 311 may be formed in a way that the first cell 311 is bent from the bent part. When the bracket 300 is mounted onto the door 100, the first cell 311 may be disposed approximately in a horizontal direction with respect to the cooking appliance.

A pair of second cells 312 may be provided at both sides of the first cell 311. The pair of second cells 312 may be respectively bent from both end portions of the first bent part 330. The pair of second cells 312 may be longer than the first cell 311 in a vertical direction. When the bracket 300 is mounted onto the door 100, the second cell 312 may be disposed approximately in the horizontal direction with respect to the cooking appliance, like the first cell 311. The second cell 312 may be provided with a first coupling hole 312a for coupling with the door 100.

The additional edge part 320 may be connected to the base part 310. The additional edge part 320 may, when the door 100 is closed, protrude in a front-rear direction of the main body 10, and overlap the lower end portion of the packing member 200, i.e., the lower frame 210 in an up-down direction of the main body 10. In this case, the additional edge part 320 may cover an upper surface 211 of the packing member 200.

Referring to FIG. 3, when the bracket 300 is mounted onto the door 100, the additional edge part 320 may be disposed approximately in the horizontal direction with respect to the cooking appliance.

When the additional edge part 320 is mounted onto the cooking appliance and the door 100 is closed, the additional edge part 320 may protrude more inward than the lower frame 210 of the packing member 200 in a front-rear direction of the cooking appliance. Additionally, the additional edge part 320 may be disposed further upward than the lower end portion of the packing member 200, i.e., the lower frame 210,when the door 100 is closed.

Referring to FIG. 3, when the additional edge part 320 and the lower frame 210 of the packing member 200 are seen from the upper portion of the door 100 when the door 100 is closed, the lower frame 210 may be covered by the additional edge part 320.

With the structure, even when a foreign substance, attached to the inner glass 170 and having a high temperature and high fluidity, flows down the inner glass 170, the foreign substance may gather on the additional edge part 320 and may not flow down to the lower frame 210.

The first bent part 330 may be connected to the base part 310 and bent with respect to the base part 310. When the bracket 300 is mounted onto the door 100, the first bent part 330 may be disposed approximately in the vertical direction.

The first bent part 330 may be provided with a third coupling hole 331 that is formed in a direction across a direction in which the first coupling hole 312a is formed, for coupling with the door 100. In other words, the direction of the third coupling hole 331 is not in parallel with the direction of the first coupling hole 312a.

The second bent part 340 may be bent and extended from the first bent part 330. When the bracket 300 is mounted onto the door 100, the second bent part 340 may be disposed approximately in the horizontal direction.

The third bent part 350 may be bent and extended from the second bent part 340, and one end of the third bent part 350 may connect to the additional edge part 320. When the bracket 300 is mounted onto the door 100 and the door 100 is closed, the third bent part 350 may be disposed approximately in the vertical direction.

In the embodiment, the third bent part 350 may be disposed at a position corresponding to the packing member 200 when the door 100 is closed. In other words, the third bent part 350 may overlap the packing member 200 in the vertical direction. The bracket 300 may be disposed further upward than the lower end portion of the packing member 200. Accordingly, the bracket 300 may effectively reduce or prevent deposition of high-temperature foreign substances, flowing from an inner surface of the door 100, i.e., the inner glass 170, upon the lower end portion of the packing member 200.

Thus, the melting, deformation or damage of the packing member 200, caused by a direct contact between the high-temperature foreign substances and the packing member 200, may be reduced or prevented effectively.

The additional edge part 320 may have a folded portion 321, in which a plate is folded in two in a certain portion such that one plate contacts another plate, in an end portion thereof. A part of the folded portion 321 may be disposed at an end 321a of the additional edge part 320, and the end 321a may have a round shape.

For example, the folded portion 321 may be formed in a way that a plate is folded in two. In other words, the folded portion 321 of the additional edge part 320 may have two layers of the plate. Since the additional edge part has the folded portion 321, the additional edge part 320 may have improved strength.

Due to the structure in which the additional edge part 320 protrudes from the door 100 in the front-rear direction of the cooking space 30, the additional edge part 320 may often be affected by an external impact, and as a result, may be deformed or damaged.

To prevent this from happening, the additional edge part 320 may have the folded portion 321 that is twice or greater thicker than an unfolded portion of the additional edge part 320. As a result, the additional edge part 320 may be effectively prevented from being twisted, deformed or damaged despite an external impact.

The folded portion 321 may have an end 321a that is rounded, and may be formed in a way that a plate is bent to form two layers in a proper portion of the additional edge part 320 and then an outside of the bent point is curved.

The additional edge part 320 may have the folded portion 321 in which the plate overlaps in two layers. The end 321a of the additional edge part 320, a part of the folded portion 321, may be rounded to protect the user.

The bracket 300 may be disposed in the lower portion of the inside of the door 100. Accordingly, a user may often contact the bracket 300 when the user opens or closes the door 100 to cook food.

In the embodiment, since the end of the additional edge part 320 of the packing member 200 is not thin and sharp but thick and rounded, as described above, injuries of the user may be effectively prevented even when the user contacts the end of the additional edge part 320.

As illustrated in FIG. 5, the bracket 300 may be formed to have an acute angle that is less than an angle formed by the second bent part 340 and the third bent part 350, i.e., an angle (X).

The angle (X) may be 70° to 88°, preferably, 80° to 87°, for example.

With the structure, the bracket 300 may allow at least a portion of one surface of the third bent part 350 to closely contact the inner glass 170 mounted onto the door 100

When the bracket 300 is firmly coupled to the door 100 through a coupling tool, the second bent part 340 and the third bent part 350 may be elastically deformed, and the angle (X) may increase to about 90° although the angle (X) originally has an acute angle.

Since the second bent part 340 and the third bent part 350 are elastically deformed, the third bent part 350 may close contact a surface of the inner glass 170 of the door 100 as a result of the firm coupling between the bracket 300 and the door 100. In this case, the third bent part 350 may be disposed approximately in the vertical direction with respect to the cooking appliance.

With the above structure, the third bent part 350 may closely contact the surface of the inner glass 170 of the door 100, a gap between the third bent part 350 and the inner glass 170 may disappear or may be narrowed. Thus, a high-temperature foreign substance, flowing down along the surface of the inner glass 170 of the door 100, may be effectively prevented from going into the gap between the third bent part 350 and the inner glass 170.

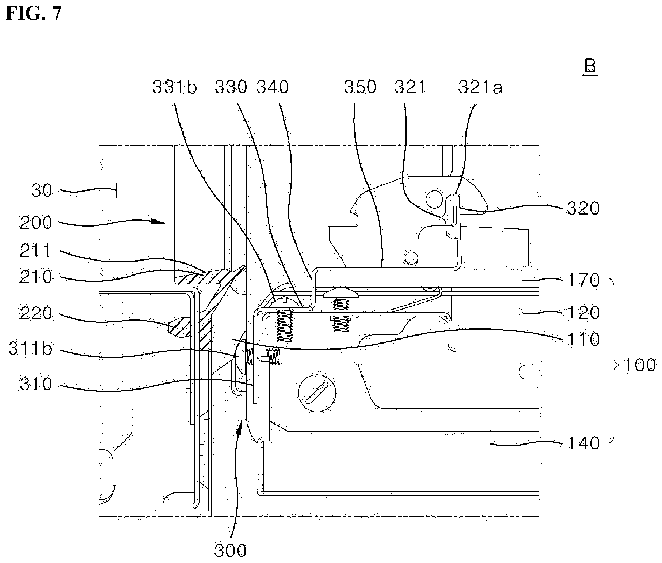

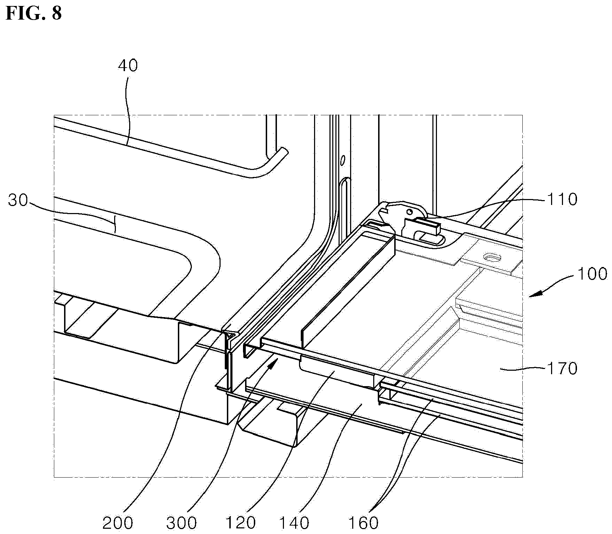

FIG. 6 is a cross-sectional view showing the cooking appliance when a door 100 is opened in one embodiment. FIG. 7 is an enlarged view showing portion B in FIG. 6. FIG. 8 is an enlarged view showing a portion of a cross section of the cooking appliance in one embodiment.

Referring to FIGS. 3 and 7, the bracket 300 may be firmly coupled respectively to lower portions of a lower end surface and an inner surface of the door 100 using a coupling tool such as a bolt at the base part 310 and the first bent part 330, and when the door 100 is opened and rotated to lie horizontally with respect to the cooking appliance, the bracket 300 may also be rotated.

As illustrated in FIGS. 6 to 8, in the state in which the door 100 is open and lies horizontally with respect to the cooking appliance, the additional edge part 320 may be disposed vertically with respect to the cooking appliance.

In this case, the gravity-driven penetration of a foreign substance into the gap between the bracket 300 and the door 100 may not occur any longer, and when the cooking appliance stops operating and the door 100 is opened, high-temperature foreign substances gathered on one surface of the additional edge part 320 may cool.

The user may remove the foreign substances gathered and cooled on the additional edge part 320 and remove the foreign substances flowing down from the inner glass 190 and gathered on one surface of the additional edge part 320 to block the foreign substances from moving to the lower frame 210 of the packing member 200.

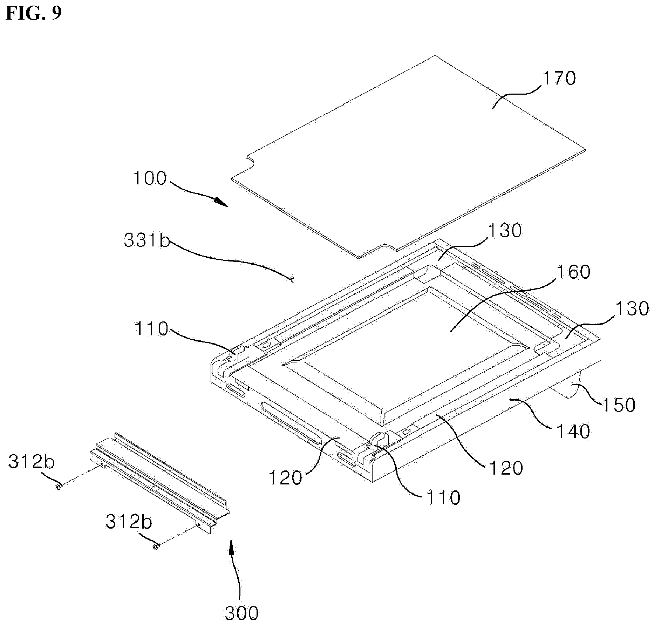

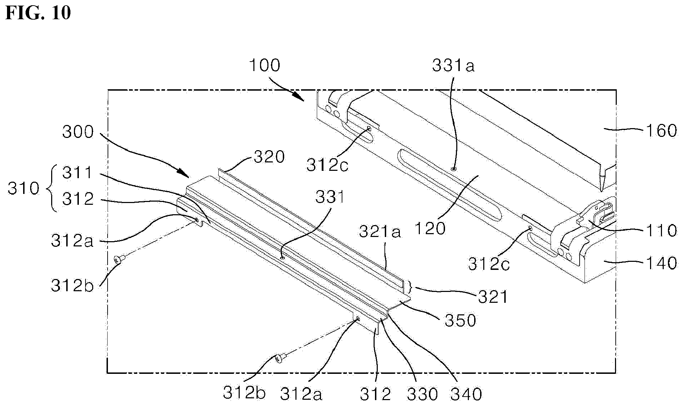

FIG. 9 is an exploded perspective view for describing a door 100 and a bracket 300 of the cooking appliance in one embodiment. FIG. 10 is an enlarged view showing a portion of FIG. 9.

The door 100 may include a first frame 120 and an inner glass 170. The door 100 may further include a locker 110, a second frame 130, a handle 150, and an outer glass 160.

The locker 110 may be disposed on both sides of the bracket 300 and spaced from the bracket 300 and may keep the door 100 closed. The locker 110 may have a hook shape. The locker 110 may be hinge-coupled to the door 100 to make a predetermined- angle rotation with respect to the door 100.

With the door 100 closed, the locker 110 may be held in a holding structure disposed at the main body 10, and accordingly, keep the door 100 closed stably.

When the door 100 is open, the locker 110 may make a predetermined-angle rotation with respect to the door 100 to escape from the holding structure disposed at the main body 10, and the user may open the door 100 using the handle 150.

The locker 110 may be mounted onto the first frame 120. The first frame 120 may have a space in a central portion thereof. The inner glass 170 may be disposed in the central portion of the first frame 120. The bracket 300 may be disposed in a lower portion of the first frame 120.

The first frame 120 may be formed in a way that plates having an approximate bar shape are coupled to one another, and may have various shapes to mount various types of devices and structures.

The second frame 130 may be disposed in an edge portion of the first frame 120. The second frame 130 may connect the plates constituting the first frame 120 with each other, or couple the first frame 120 to a third frame 140.

The third frame 140 may have a space in a central portion thereof, surround the first frame 120 and the second frame 130, and form an exterior of the door 100. As illustrated in FIG. 1, the third frame 140 may occupy most of the exterior of the front of the cooking appliance, with the door 100 closed.

The handle 150 may be mounted onto a front surface of the third frame 140, and the user may open and close the door 100 manually using the handle 150.

The outer glass 160 may be disposed in the central portion of the third frame 140 and disposed outside the door 100. As illustrated in FIG. 8, the outer glass 160 may be a multilayered glass for thermal insulation.

The inner glass 170 may be disposed in the central portion of the first frame 120 and disposed inside the door 100. When the door 100 is closed, the inner glass 170 may be disposed in an entrance portion of the cooking space 30.

The outer glass 160 and the inner glass 170 may has a plate shape and be made of a transparent or translucent glass material.

When the glass is made of a transparent material, the user may see a food item being cooked in the cooking space 30 through the inner glass 170 and the outer glass 160. A lighting device may be disposed at a proper position within the cooking space 30 such that the user sees a food item during cooking more conveniently.

The second cell 312 of the base part 310 may have a first coupling hole 312a. The door 100 may have a second coupling hole 312c for coupling with the base part 310 at a position corresponding to the first coupling hole 312a. A lower end surface of the first frame 120, i.e., the lower end surface of the door 100 may be thin, and the second coupling hole 312c may be formed on the lower end surface of the first frame 120, i.e., the lower end surface of the door 100.

As a result of fastening of a first coupling tool 312b, such as a bolt, a screw nail and the like, to the first coupling hole 312a and the second coupling hole 312c, the base part 310 of the bracket 300 may be fastened to the door 100.

The second bent part 340 may be provided with a third coupling hole 331 that is formed in a direction across a direction in which the first coupling hole 312a is formed. The door 100 may be provided with a fourth coupling hole 331a for coupling with the first bent part 330 at a position corresponding to the third coupling hole 331. A lower portion of a lateral surface of the first frame 120 may be thin, and the fourth coupling hole 331a may be formed in the lower portion of the lateral surface of the first frame 120.

As a result of fastening of a second coupling tool 331b, such as a bolt, a screw nail and the like, to the third coupling hole 331 and the fourth coupling hole 331a, the second bent part 340 of the bracket 300 may be fastened to the door 100.

With the structure, the first coupling tool 312b and the second coupling tool 331b may be fastened to the bracket 300 and the door 100 in a way that the first coupling tool 312b crosses the second coupling tool 331b in a lengthwise direction. Accordingly, the bracket 300 may be firmly coupled to the door 100.

Referring back to FIG. 3, the bracket 300 may be mounted onto the first frame 120 forming the lower portion of the inside of the door 100 and the lower end surface of the door 100, and may be entirely disposed in the lower portion of the door 100.

Hereunder, a structure of the bracket 300 with the door 100 closed is described unless specified otherwise.

The additional edge part 320 may be disposed higher than a lower end of the inner glass 170 when the door 100 is closed. With the structure, a high-temperature foreign substance flowing down from the inner glass 170 may pile on one surface of the additional edge part 320, i.e., an upper surface of the additional edge part 320 in FIG. 3 but may not flow to the lower end of the inner glass 170.

Thus, the downward flow of the foreign substance to the lower end of the inner glass 170 and the fall of the foreign substance onto an indoor floor outside the cooking appliance, which would occur without the bracket 300 when the door 100 is opened, may be prevented.

One surface of the base part 310 may be disposed to face the lower end surface of the door 100, i.e., the lower end surface of the first frame 120, and at least a portion of one surface of the first bent part 330 may closely contact the inner surface of the door 100, i.e., an inner surface of the first frame 120.

With the door 100 closed, an upper surface of the base part 310 may face and contact the lower end surface of the door 100. In this case, when the first coupling tool 312b is firmly fastened, the upper surface of the base part 310 may closely contact the lower end surface of the door 100. Accordingly, a foreign substance may be effectively prevented from going into a gap between the base part 310 and the door 100.

Additionally, the upper surface of the base part 310 may be disposed on a flat surface that is disposed in a direction approximately perpendicular to the gravitational direction. Thus, a gravity-driven flow of a foreign substance, going into the upper surface of the base part 310, to the lower portion of the door 100 may be reduced or prevented.

When the second coupling tool 331b is firmly fastened, one surface of the first bent part 330 may closely contact one surface of the door 100. Accordingly, a foreign substance may be effectively prevented from going into a gap between the first bent part 330 and the door 100.

One surface of the second bent part 340 may be disposed to face the lower end surface of the inner glass 170, and at least a portion of one surface of the third bent part 350 may closely contact one surface of the inner glass 170.

An upper surface of the second bent part 340 may be disposed on a flat surface that is disposed in the direction approximately perpendicular to the gravitational direction. Thus, a gravity-driven flow of a foreign substance, going through the upper surface of the second bent part 340, to the lower portion of the door 100 may be reduced or prevented.

As described above, the angle (X) between the second bent part 340 and the third bent part 350 may be an acute angle. Accordingly, the third bent part 350 may closely contact one surface of the inner glass 170 as a result elastic deformation when the bracket 300 is coupled to the door 100.

Thus, the penetration of a foreign substance, flowing down along the surface of the inner glass 170, into the gap between the third bent part 350 and the inner glass 170 may be effectively reduced or prevented.

In the embodiment, the bracket 300 may have a plurality of bent portions. When the bracket 300 is firmly coupled to the door 100, the bent portions may closely contact the surface of the door 100 or be disposed approximately in the horizontal direction with respect to the cooking appliance. Thus, a flow of a high-temperature foreign substance, flowing down along the surface of the inner glass 170, to the packing member 200 along the gap between the bracket 300 and the door 100 may be effectively reduced or prevented.

The invention is defined by the features specified in the appended claims.

## Claims

1. A cooking appliance, comprising:
a main body (10) provided therein with a cooking space;
a door (100) configured to open and close the cooking space;
a packing member (200) disposed at an entrance of the cooking space, and configured to seal a gap that is created in a portion where the main body (10) contacts the door (100) in a closed state; and
a bracket (300) coupled to a lower portion of the door (100) for preventing contact between the packing member (200) and a foreign substance moving to the lower portion of the door (100) when the door (100) is closed,
the bracket (300), comprising:
a base part (310) coupled to the lower portion of the door (100); and
an additional edge part (320) connected to the base part (310), and having a shape extending in a front-rear direction of the main body (10) when the door (10) is closed,
**characterized in that** the addition edge part (320) is disposed in the horizontal direction with respect to the cooking appliance and configured to cover an upper surface of the packing member (200) when the door (10) is closed.

2. The cooking appliance of claim 1, wherein, when the door (100) is closed, one end of the additional edge part (320) is arranged to contact an inner surface of the door (100) and the other end of the additional edge part (320) is positioned further inward than the packing member (200) to guide a high-temperature foreign substance, flowing down along the inner surface of the door (100), inside the cooking space not to contact the upper surface of the packing member (200).

3. The cooking appliance of claim 1 or 2, wherein the bracket (300) further comprises:
a first bent part (330) connected to the base part (310) and bent with respect to the base part (310);
a second bent part (340) bent and extended from the first bent part (330); and
a third bent part (350) bent and extended from the second bent part (340) and having one end connected to the additional edge part (320).

4. The cooking appliance of claim 3, wherein an angle formed by the second bent part (340) and the third bent part (350) of the bracket (300) is an acute angle, and in a state in which the bracket (300) is coupled to the door (100), at least a portion of one surface of the third bent part (350) contacts the door (100).

5. The cooking appliance of claim 3 or 4, the base part (310), comprising:
a first cell (311); and
a pair of second cells (312) disposed at both sides of the first bent part (330) and being longer than the first part (311),
wherein each of the second cells (312) is provided with a first coupling hole (312a) for coupling with the door (100), and
the door (100) is provided with a second coupling hole (312) corresponding to the first coupling hole (312a) for coupling with the base part (310).

6. The cooking appliance of any one of claims 3 to 5, wherein the first bent part (330) is provided with a third coupling hole (331) for coupling with the door (100), and
the door (100) is provided with a fourth coupling hole (331a) corresponding to the third coupling hole (331) for coupling with the first bent part (330).

7. The cooking appliance of any one of claims 3 to 6, wherein the door (100) comprises:
a first frame (120) which has space in a central portion thereof, and at which the bracket (300) is disposed; and
an inner glass (170) disposed in the central portion of the first frame (120) and disposed inside the door (100),
wherein the additional edge part (320) is disposed higher than a lower end of the inner glass (170) with the door (100) closed.

8. The cooking appliance of any one of claims 3 to 7, wherein one surface of the base part (310) is disposed to face a lower end surface of the door (100), and at least a portion of one surface of the first bent part (330) contacts an inner surface of the door (100).

9. The cooking appliance of claim 7, wherein one surface of the second bent part (340) is disposed to face a lower end surface of the inner glass (170), and
at least a portion of one surface of the third bent part (350) contacts one surface of the inner glass (170).

10. The cooking appliance of any one of claims 1 to 9, wherein the additional edge part (320) is disposed further upward than a lower end portion of the packing member (200) when the door (100) is closed.

11. The cooking appliance of any one of claims 1 to 10, wherein the bracket (300) is integrally formed in the manner of bending one plate.

12. The cooking appliance of claim 11, wherein the additional edge part (320) is provided with a folded portion in which the plate is folded in two layers.

13. The cooking appliance of claim 12, wherein a portion of the folded portion is disposed at an end of the additional edge part such that the end of the additional edge part (320) is rounded.

## Patentansprüche

1. Kochgerät, das aufweist:
einen Hauptkörper (10), der darin mit einem Garraum versehen ist;
eine Tür (100), die konfiguriert ist, den Garraum zu öffnen und zu schließen;
ein Dichtungselement (200), das an einem Eingang des Garraums angeordnet und konfiguriert ist, einen Spalt abzudichten, der in einem Abschnitt entsteht, in dem der Hauptkörper (10) die Tür (100) in einem geschlossenen Zustand berührt; und
eine Halterung (300), die mit einem unteren Abschnitt der Tür (100) gekoppelt ist, um einen Kontakt zwischen dem Dichtungselement (200) und einer Fremdsubstanz zu verhindern, die sich zu dem unteren Abschnitt der Tür (100) bewegt, wenn die Tür (100) geschlossen ist,
wobei die Halterung (300) aufweist:
einem Basisteil (310), der mit dem unteren Abschnitt der Tür (100) gekoppelt ist; und
einen zusätzlichen Kantenteil (320), der mit dem Basisteil (310) verbunden ist und eine Form aufweist, die sich in einer Vorwärts-Rückwärts-Richtung des Hauptkörpers (10) erstreckt, wenn die Tür (10) geschlossen ist,
**dadurch gekennzeichnet, dass** der zusätzliche Kantenteil (320) in der horizontalen Richtung in Bezug auf das Kochgerät angeordnet ist und konfiguriert ist, eine obere Fläche des Verpackungselements (200) abzudecken, wenn die Tür (10) geschlossen ist.

2. Kochgerät nach Anspruch 1, wobei, wenn die Tür (100) geschlossen ist, ein Ende des zusätzlichen Kantenteils (320) so angeordnet ist, dass es eine Innenfläche der Tür (100) berührt, und das andere Ende des zusätzlichen Kantenteils (320) weiter innen als das Dichtungselement (200) positioniert ist, um eine Hochtemperatur-Fremdsubstanz, die entlang der Innenfläche der Tür (100) nach unten fließt, in den Garraum zu leiten, so dass sie die obere Fläche des Dichtungselements (200) nicht berührt.

3. Kochgerät nach Anspruch 1 oder 2, wobei die Halterung (300) ferner aufweist:
einen ersten gebogenen Teil (330), der mit dem Basisteil (310) verbunden und in Bezug auf den Basisteil (310) gebogen ist;
einen zweiten gebogenen Teil (340), der gebogen ist und sich von dem ersten gebogenen Teil (330) erstreckt; und
einen dritten gebogenen Teil (350), der gebogen ist und sich von dem zweiten gebogenen Teil (340) erstreckt und dessen eines Ende mit dem zusätzlichen Kantenteil (320) verbunden ist.

4. Kochgerät nach Anspruch 3, wobei ein Winkel, der von dem zweiten gebogenen Teil (340) und dem dritten gebogenen Teil (350) der Halterung (300) gebildet wird, ein spitzer Winkel ist und in einem Zustand, in dem die Halterung (300) mit der Tür (100) gekoppelt ist, mindestens ein Abschnitt einer Oberfläche des dritten gebogenen Teils (350) die Tür (100) berührt.

5. Kochgerät nach Anspruch 3 oder 4, wobei der Basisteil (310) aufweist:
eine erste Zelle (311); und
ein Paar von zweiten Zellen (312), die an beiden Seiten des ersten gebogenen Teils (330) angeordnet sind und länger als der erste Teil (311) sind,
wobei jede der zweiten Zellen (312) mit einem ersten Kopplungsloch (312a) zum Koppeln mit der Tür (100) versehen ist, und
die Tür (100) mit einem zweiten Kopplungsloch (312) versehen ist, das dem ersten Kopplungsloch (312a) zum Koppeln mit dem Basisteil (310) entspricht.

6. Kochgerät nach einem der Ansprüche 3 bis 5, wobei der erste gebogene Teil (330) mit einem dritten Kopplungsloch (331) zum Koppeln mit der Tür (100) versehen ist, und die Tür (100) mit einem vierten Kopplungsloch (331a) versehen ist, das dem dritten Kopplungsloch (331) zum Koppeln mit dem ersten gebogenen Teil (330) entspricht.

7. Kochgerät nach einem der Ansprüche 3 bis 6, wobei die Tür (100) aufweist:
einen ersten Rahmen (120), der in seinem mittleren Abschnitt einen Raum aufweist und an dem die Halterung (300) angeordnet ist; und
ein inneres Glas (170), das in dem mittleren Abschnitt des ersten Rahmens (120) angeordnet ist und sich im Inneren der Tür (100) befindet,
wobei der zusätzliche Kantenteil (320) bei geschlossener Tür (100) höher als ein unteres Ende des inneren Glases (170) angeordnet ist.

8. Kochgerät nach einem der Ansprüche 3 bis 7, wobei eine Fläche des Basisteils (310) so angeordnet ist, dass sie einer unteren Endfläche der Tür (100) zugewandt ist, und mindestens ein Abschnitt einer Fläche des ersten gebogenen Teils (330) eine Innenfläche der Tür (100) berührt.

9. Kochgerät nach Anspruch 7, wobei eine Fläche des zweiten gebogenen Teils (340) so angeordnet ist, dass sie einer unteren Endfläche des inneren Glases (170) zugewandt ist, und
mindestens ein Abschnitt einer Fläche des dritten gebogenen Teils (350) eine Fläche des inneren Glases (170) berührt.

10. Kochgerät nach einem der Ansprüche 1 bis 9, wobei der zusätzliche Kantenteil (320) weiter oben angeordnet ist als ein unterer Endabschnitt des Dichtungselements (200), wenn die Tür (100) geschlossen ist.

11. Kochgerät nach einem der Ansprüche 1 bis 10, wobei die Halterung (300) durch Biegen einer Platte integral ausgebildet ist.

12. Kochgerät nach Anspruch 11, wobei der zusätzliche Kantenteil (320) mit einem gefalteten Abschnitt versehen ist, in dem die Platte in zwei Schichten gefaltet ist.

13. Kochgerät nach Anspruch 12, wobei ein Teil des gefalteten Abschnitts an einem Ende des zusätzlichen Kantenteils angeordnet ist, so dass das Ende des zusätzlichen Kantenteils (320) abgerundet ist.

## Revendications

1. Appareil de cuisson, comprenant :
un corps principal (10) contenant un espace de cuisson ;
une porte (100) prévue pour ouvrir et fermer l'espace de cuisson ;
un élément de remplissage (200) disposé à l'entrée de l'espace de cuisson et prévu pour obturer un joint créé dans une partie où le corps principal (10) est en contact avec la porte (100) en état de fermeture ; et
un support (300) raccordé à une partie inférieure de la porte (100) pour empêcher le contact entre l'élément de remplissage (200) et une matière extérieure se déplaçant vers la partie inférieure de la porte (100) lorsque la porte (100) est fermée,
ledit support (300) comprenant :
une partie de base (310) raccordée à la partie inférieure de la porte (100) ; et
une partie de bord additionnel (320) raccordée à la partie de base (310), et ayant une forme s'étendant dans une direction antéropostérieure du corps principal (10) lorsque la porte (10) est fermée,
**caractérisé en ce que** la partie de bord additionnel (320) est disposée dans la direction horizontale par rapport à l'appareil de cuisson et est prévue pour couvrir une surface supérieure de l'élément de remplissage (200) lorsque la porte (10) est fermée.

2. Appareil de cuisson selon la revendication 1, où, lorsque la porte (100) est fermée, une extrémité de la partie de bord additionnel (320) est disposée de manière à entrer en contact avec une surface intérieure de la porte (100), et l'autre extrémité de la partie de bord additionnel (320) est disposée plus à l'intérieur que l'élément de remplissage (200) de manière à guider une matière extérieure à température élevée, s'écoulant le long de la surface intérieure de la porte (100), à l'intérieur de l'espace de cuisson pour ne pas entrer en contact avec la surface supérieure de l'élément de remplissage (200).

3. Appareil de cuisson selon la revendication 1 ou la revendication 2, où le support (300) comprend en outre :
une première partie pliée (330) raccordée à la partie de base (310), et pliée par rapport à la partie de base (310) ;
une deuxième partie pliée (340), pliée et s'étendant à partir de la première partie pliée (330) ; et
une troisième partie pliée (350), pliée et s'étendant à partir de la deuxième partie pliée (340), et dont une extrémité est raccordée à la partie de bord additionnel (320).

4. Appareil de cuisson selon la revendication 3, où un angle formé par la deuxième partie pliée (340) et la troisième partie pliée (350) du support (300) est un angle aigu, et où, dans un état où le support (300) est raccordé à la porte (100), au moins une partie d'une surface de la troisième partie pliée (350) est en contact avec la porte (100).

5. Appareil de cuisson selon la revendication 3 ou la revendication 4, où la partie de base (310), comprend :
une première cellule (311) ; et
une paire de deuxièmes cellules (312) disposées de part et d'autre de la première partie pliée (330) et plus longues que la première cellule (311),
où chacune des deuxièmes cellules (312) est pourvue d'un premier trou de connexion (312a) pour raccordement avec la porte (100), et
où la porte (100) est pourvue d'un deuxième trou de connexion (312) correspondant au premier trou de connexion (312a) pour raccordement avec la partie de base (310).

6. Appareil de cuisson selon l'une des revendications 3 à 5, où la première partie pliée (330) est pourvue d'un troisième trou de connexion (331) pour raccordement avec la porte (100), et
où la porte (100) est pourvue d'un quatrième trou de connexion (331a) correspondant au troisième trou de connexion (331) pour raccordement avec la première partie pliée (330).

7. Appareil de cuisson selon l'une des revendications 3 à 6, où la porte (100) comprend :
un premier cadre (120) présentant un espace dans sa partie centrale et sur lequel le support (300) est disposé ; et
une vitre intérieure (170) disposée dans la partie centrale du premier cadre (120) et disposée à l'intérieur de la porte (100),
où la partie de bord additionnel (320) est disposée plus haut que l'extrémité inférieure de la vitre intérieure (170) lorsque la porte (100) est fermée.

8. Appareil de cuisson selon l'une des revendications 3 à 7, où une surface de la partie de base (310) est disposée de manière à faire face à une surface d'extrémité inférieure de la porte (100), et au moins une partie d'une surface de la première partie pliée (330) est en contact avec une surface intérieure de la porte (100).

9. Appareil de cuisson selon la revendication 7, où une surface de la deuxième partie pliée (340) est disposée de manière à faire face à une surface d'extrémité inférieure de la vitre intérieure (170), et
au moins une partie d'une surface de la troisième partie pliée (350) est en contact avec une surface de la vitre intérieure (170).

10. Appareil de cuisson selon l'une des revendications 1 à 9, où la partie de bord additionnel (320) est disposée plus haut qu'une partie d'extrémité inférieure de l'élément de remplissage (200) lorsque la porte (100) est fermée.

11. Appareil de cuisson selon l'une des revendications 1 à 10, où le support (300) est formé d'un seul tenant par pliage d'une plaque.

12. Appareil de cuisson selon la revendication 11, où la partie de bord additionnel (320) est prévue avec une partie rabattue où la plaque est repliée en deux couches.

13. Appareil de cuisson selon la revendication 12, où une partie de la partie rabattue est disposée à une extrémité de la partie de bord additionnel, de sorte que l'extrémité de la partie de bord additionnel (320) est arrondie.
